# EUROPEAN PATENT APPLICATION

(11) **EP 4 607 386 A1**
(43) Date of publication of application: **27.08.2025**
(21) Application number: 24158809.4
(22) Date of filing: 21.02.2024
(51) Int. Cl.: G06F 21/57, G06F 21/62, H04L 9/40

(54) **REMOTE ATTESTATION**

(71) Applicant: ABB SCHWEIZ AG, 5400 Baden (CH)
(72) Inventor: DAWOUD, Abdallah, 66121 Saarbrücken (DE); FINSTER, Soeren, 76139 Karlsruhe (DE); KOHNHAEUSER, Florian, 64560 Riedstadt (DE)
(74) Representative: Maiwald GmbH

(57) **Abstract**

There is provided an attestation procedure, comprising, by a verifier: receiving, as input, a measurement log representing measured states of components of a prover; requesting, from a universal measurement database, security-related information pertaining to the components; receiving, from the universal measurement database, a report comprising the security-related information; and outputting a non-binary, severity-based attestation outcome based on the received security-related information. Also provided is an attestation procedure, comprising, by the prover: sending, to the verifier, the measurement log representing measured states of components of the prover.

## Description

### FIELD OF THE INVENTION

The invention relates to attestation procedures and systems.

### BACKGROUND

Remote attestation (RA) is a security mechanism used to verify the integrity of software systems. RA involves verifying that the state of a designated system, called the prover, matches a predefined trusted state registered with a remote system acting as a verifier. The verifier utilizes cryptographic protocols to remotely establish trust in the prover. The attestation outcome is binary, denoting merely that integrity is held or violated.

### SUMMARY

To overcome one or more of these deficiencies, there is provided, according to a first aspect of the invention, an attestation procedure, comprising, by a verifier:
receiving, as input, a measurement log representing measured states of components of a prover;
requesting, from a universal measurement database, security-related information pertaining to the components;
receiving, from the universal measurement database, a report comprising the security-related information; and
outputting a non-binary, severity-based attestation outcome based on the received security-related information.

According to a second aspect of the invention, there is provided an attestation procedure, comprising, by a prover, sending, to a verifier, a measurement log representing measured states of components of the prover.

According to a third aspect, there is provided an attestation procedure comprising the attestation procedures of the first and second aspects.

The attestation outcome according to the present disclosure is non-binary, i.e., its level may be selected from three or more levels. The present disclosure is based on the recognition that existing remote attestation (RA) schemes suffer from limitations: describing system integrity in binary terms overlooks potential insecurities that fall between the two extremes. An uncompromised system can contain dangerous software setups that, due to lack of expressiveness, would remain unreported, potentially contributing to violating integrity. For instance, trusting a component that is susceptible to a Control-Flow (CF) vulnerability can break the system's security without violating its static integrity, i.e., the static integrity of the component's file/data. Trusting vulnerable software often happens due to the knowledge gap between software engineers and system security experts, a gap that grows with increasing application complexity. Threats may involve contextual and configurational vulnerabilities. Yet, current RA schemes treat the prover's components individually despite experience showing that components can be trusted in isolation but vulnerable in combination. Further examples of contextual insecurity include the presence of too many, obsolete, or historically-problematic components in the prover. Examples of configurational insecurities include insecure configurations (e.g., exposing critical interfaces) or conflicting configurations.

By collecting security information pertaining to the components from the universal measurement database, the systems and procedures described herein are able to produce a severity-based attestation outcome which can be used by system maintainers to provide escalating countermeasure recommendations. The non-binary, severity-based attestation outcome may be seen as extending RA's detection capabilities to cover contextual and configurational security, with minimal extra overhead on the prover side, rendering the claimed solution suitable for resource-constrained devices.

The three or more levels of the non-binary attestation outcome from which its value may be selected may comprise for example one severity level indicating that the attestation succeeded, another severity level indicating the attestation failed, and at least one further severity level providing information or a warning concerning a potential integrity violation, that is, an integrity violation which does not yet currently exist but which may arise in future. The procedure of the second aspect may further comprise selecting the security level for the non-binary, severity-based attestation outcome based on the received security-related information. The at least one further level may indicate one or more of the following: the existence of too many components in the prover; the existence of an historically-problematic component in the prover; the existence of a problematic combination of components in the prover; the existence of an outdated or obsolete component in the prover. The attestation outcome may thus comprise a scale-based indication of the severity of the security concerns.

The universal measurement database may map component-related information such as hashes to the security-related information pertaining to those components. The security-related information may comprise known or reported vulnerabilities of the components. The security-related information may further comprise information identifying the component (e.g., name and version). The universal measurement database may aggregate the security-related information from one or more external sources, including for example a repository for Common Vulnerabilities and Exposures (CVEs). The universal measurement database may analyse compositional insecurity by cross-referencing individual components that may pose a security threat when run together in the same environment. The universal measurement database may be divided into multiple spaces, comprising for example at least one local universal measurement database and at least one remote universal measurement database. The at least one local universal measurement database may comprise security-related information specific to the components of the prover. The at least one remote universal measurement database may comprise security-related information pertaining to commonly-available prover components. The procedure of the second aspect may further comprise the verifier selecting a target universal measurement database based on the received measurement log.

The procedure of the first aspect may comprise the verifier communicating with the universal measurement database using one or more knowledge-retrieval interfaces exposed by the universal measurement database. The universal measurement database may in turn be updated with new security-related information by way of one or more knowledge-feeding interfaces.

The procedure of the first aspect may further comprise the verifier consulting one or more security policies for detecting vulnerabilities based on the report received from the universal measurement database.

The non-binary, severity-based attestation outcome may be output to a third party such as a system administrator or system maintainer. The attestation outcome may be displayed to a user, optionally alongside details of the issue when the attestation fails. Any of the attestation procedures described herein may further comprise the step of responding to the attestation outcome based on a severity level contained therein. It may be the system administrator or system maintainer who responds to the report, e.g., by flushing out compromised software.

According to a fourth aspect, there is provided a computing system configured to perform the procedure of the first aspect in the role of the verifier.

According to a fifth aspect, there is provided a computing system configured to perform the procedure of the second aspect in the role of the prover.

According to a sixth aspect, there is provided an attestation system comprising the computing systems of the fourth and fifth aspects.

The system of any one or more of the fourth-sixth aspects may comprise a universal measurement database as described herein. Alternatively, the measurement database may be implemented as a standalone system, for example as a cloud-based system.

The procedure of any one or more of the first-third aspects may be computer implemented.

According to a seventh aspect, there is provided a computer program (product) comprising instructions which, when executed by a computing system, enable or cause the computing system to perform the procedure of any one or more of the first-third aspects.

According to an eighth aspect, there is provided a computer-readable (storage) medium comprising instructions which, when executed by a computing system, enable or cause the computing system to perform the procedure of any one or more of the first-third aspects. The computer-readable medium may be transitory or non-transitory, volatile or non-volatile.

As used herein, the term "components" relates to entities whose state is measured as part of the remote attestation procedure, e.g., configurations, bootloaders, binaries, libraries, and/or scripts.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawings, in which:-
FIG. 1 illustrates a remote attestation system and procedure according to the present disclosure;
FIG. 2 illustrates an example of a non-binary, severity-based attestation outcome according to the present disclosure; and
FIG. 3 illustrates a computing system that can be used in accordance with the systems and procedures disclosed herein.

### DETAILED DESCRIPTION

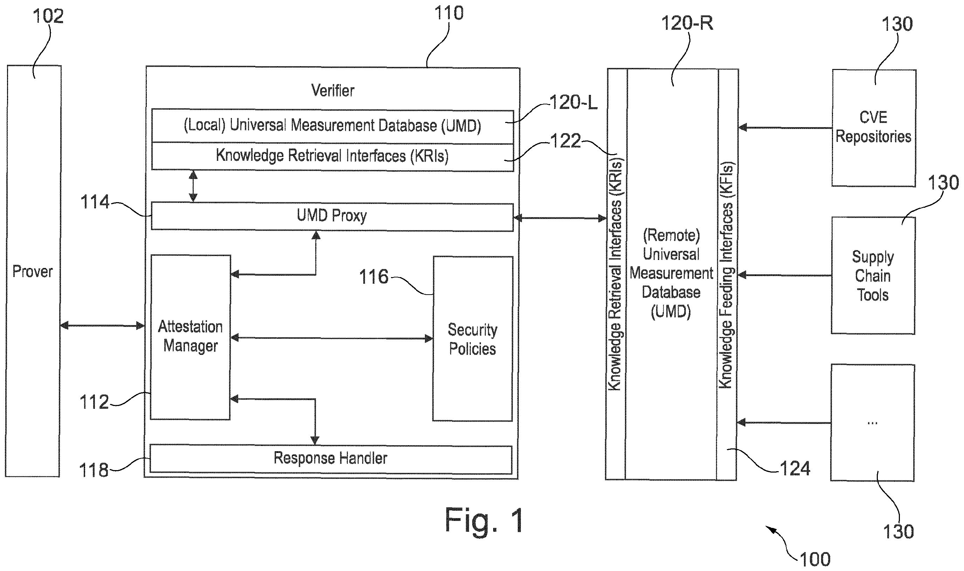

FIG. 1 illustrates a remote attestation system 100 and a corresponding procedure according to the present disclosure, whereby prover 102 seeks to verify the integrity of its software in conjunction with verifier 110. The prover 102 maintains a measurement log which comprises hashes representing the measured states of components. The hashes may be sorted by order of measurement. In step 1, the prover 102 initiates the procedure by sending the measurement log to the verifier 110. The prover 102 optionally signs the measurement log before sending it. In one non-limiting example, the prover 102 piggybacks the measurement log onto the request which is typically sent as part of the standard RA procedure.

In step 2, an attestation manager 112 of the verifier 110 manages attestation of the integrity of the prover 102 based on the received measurement log.

According to the present disclosure, the conventional remote attestation procedure is extended by use of a Universal Measurement Database (UMD) 120, which maps hashes of components to security-related information. The security-related information may comprise for example information identifying the component (e.g., name and version) along with known or reported vulnerabilities of the component. To that end, the UMD 120 aggregates security-related information concerning components from one or more external sources 130, including for example a repository for Common Vulnerabilities and Exposures (CVEs). Additionally, the UMD 120 considers compositional insecurity by cross-referencing individual components that may pose a security threat when run together in the same environment. Consequently, the UMD 120 provides security-related information not only for individual components, but also for combinations thereof. In one non-limiting example the UMD 120 stores component measurements, wherein each measurement is for a component version, meaning, one component can have multiple entries in the UMD 120. Each measurement has additional details when a problem is associated with the component and version that it pertains to. For example, <Measurement A> is for <Component B> and <Version C) and details the issue, e.g., that <Measurement A> is dangerous for the presence of <Vulnerability X> in <Component B> and <Version C>. Or, that the presence of <Measurement A> and <Measurement A"> in the prover's system is dangerous, for the insecure configurations of the components and versions associated with those measurements.

The verifier 110 has access to the UMD 120 and checks the received measurement log against the UMD 120, utilizing the information available in the UMD 120.

In the non-limiting example illustrated in FIG. 1, the UMD 120 is divided into two spaces: the remote UMD 120-R and the local UMD 120-L. The remote UMD 120-R is centrally managed and shared among multiple verifiers, ensuring efficient and consistent management of shared security knowledge. The local UMD 120-L, on the other hand, is specific to the components of the one prover 102 and is therefore hosted locally on the corresponding verifier 110 to address data privacy concerns.

In step 3 of the procedure, the attestation manager 112 iterates over the entries in the measurement log and formulates, for each entry, a request for security details of the component concerned. The request may comprise the hash of the component as reported in the measurement log.

In step 4, a UMD proxy 1144 of the verifier 110 determines the target UMD for handling each request, and directs the request to the appropriate UMD 120.

In step 5, if the UMD proxy 114 decides that the request is to be handled locally, the request is passed to the local UMD 120-L.

In step 6, if the UMD proxy 114 decides that the request is to be handled remotely, the request is passed to the remote UMD 120-R.

The UMD 120 exposes Knowledge-Retrieval Interfaces (KRIs) 122 and Knowledge Feeding Interfaces (KFIs) 124. The verifier 110 utilizes the KRls 122 to query the UMD 120 regarding the security status of the components. Meanwhile, the KFls 124 provide the means whereby the UMD 120 is updated with the latest security-related information concerning components, for example in the form of incident reports specifying names and versions of vulnerable components and incident details. In this way, the KFIs 124 seamlessly integrate with the external knowledge sources 130 such as CVE repositories and supply chain tools.

The verifier 110 receives the report provided by the UMD 120.

In step 7, the verifier 110 optionally uses the report provided by the UMD 120 to consult one or more security policies 116 for threat detection. While the UMD 120 identifies the components that exist on the prover system and flags immediate issues, for example that a vulnerable component exists (i.e., the measurement identifies the component, and external sources taint it as vulnerable, so the decision is direct), the admin can configure one or more security policies 116 governing the handling of such issues. One example of a security policy 116 may state that, although the component is vulnerable, the issue is not to be reported because the vulnerability is trivial. Another exemplary security policy 116 says that, if X number of low-severity vulnerabilities exist, the overall component is to be treated as critically dangerous. For example, a policy may identify a component as a threat if a certain number of CVEs of specific CVE scores are associated with it. Another non-limiting example of a security policy 116 may flag the prover 102 as susceptible to threats if the number of binaries in the prover system exceeds a predetermined threshold.

In step 8, the attestation manager 112 forwards the report, optionally including results from the security policies, to a response handler 118.

In step 9, the response handler 118 optionally encodes the received information and notifies the prover 102 of the outcome of the remote attestation process.

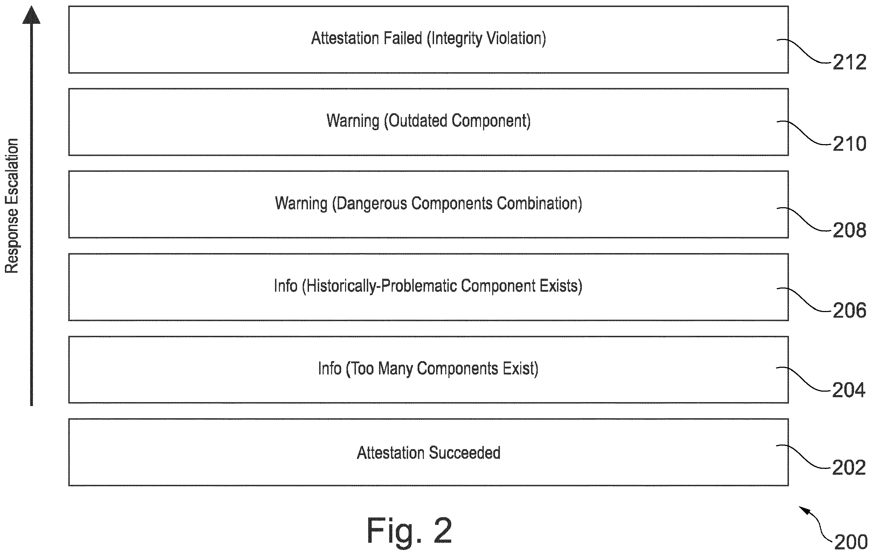

FIG. 2 illustrates an example of a non-binary, severity-based attestation outcome 200 according to the present disclosure. As mentioned above, the conventional attestation outcome is binary, indicating simply whether the attestation succeeded or failed. Rather, the attestation outcome 200 comprises more than two levels, corresponding to the severity of the security estimate of the vulnerability of the prover 102. The first severity level 202 indicates simply that the attestation succeeded. The second level 204 is provided for information only to indicate that too many components exist in the prover 102 (i.e., there are more than a predetermined threshold). The third level 206 is also provided for information only to indicate that a historically-problematic component exists in the prover 102. The fourth level 208 provides a warning to indicate that a dangerous combination of components exists in the prover 102. The fifth level 210 also provides a warning to indicate that an outdated component exists at the prover 102. Finally, the sixth level 112 indicates simply that the attestation failed, as the result of an integrity violation. It will be understood that the levels shown in FIG. 2 are provided for purposes of illustration only and that more, fewer, or different levels may be used according to circumstances.

FIG. 2 further indicates that the severity of the attestation outcome may correspond to an escalating level of response For example, low-severity attestation outcomes can be addressed by upgrading components, whereas critical severity attestation outcomes may require flashing a new bootloader.

In this way, the returned severity level reflects the content of the report provided by the UMD 120.

Optionally, continuous RA may be enabled, in which case the verifier 110 repeatedly recomputes the signed measurement log, with the attestation outcome being optionally pushed into developer frameworks (e.g., ticket systems) to facilitate the timely handling of security incidents.

The attestation procedures and systems described herein thus extend the standard RA procedures to convey the security-related information concerning the prover's system, so that a security decision may be made which goes beyond mere integrity checking. Unlike the binary outcome of standard RA, the procedures and systems described herein utilize the collected security-related information to provide a non-binary, severity-based assessment outcome enriched with details of identified issues. Thus, the procedures and systems described herein bridge the knowledge gap between security and software engineers and address configurational and contextual security, effectively enhancing overall system security. The procedures and systems involve minimal engineering effort to implement and reduce dependency on human efforts.

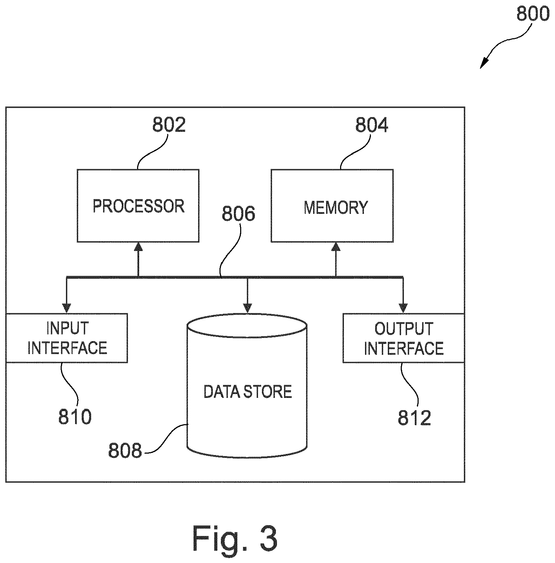

FIG. 3 illustrates an exemplary computing system 800 that can be used in accordance with the systems and procedures disclosed herein. The computing system 800 may form part of or comprise any desktop, laptop, server, or cloud-based computing system. The computing system 800 includes at least one processor 802 that executes instructions that are stored in a memory 804. The instructions may be, for instance, instructions for implementing functionality described as being carried out by one or more components described herein or instructions for implementing one or more of the procedures described herein. The processor 802 may access the memory 804 by way of a system bus 806. In addition to storing executable instructions, the memory 804 may also store conversational inputs, scores assigned to the conversational inputs, etc.

The computing system 800 additionally includes a data store 808 that is accessible by the processor 802 by way of the system bus 806. The data store 808 may include executable instructions, log data, etc. The computing system 800 also includes an input interface 810 that allows external devices to communicate with the computing system 800. For instance, the input interface 810 may be used to receive instructions from an external computer device, from a user, etc. The computing system 800 also includes an output interface 812 that interfaces the computing system 800 with one or more external devices. For example, the computing system 800 may display text, images, etc. by way of the output interface 812.

It is contemplated that the external devices that communicate with the computing system 800 via the input interface 810 and the output interface 812 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing system 800 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing system 800 may be a distributed system. Thus, for instance, several devices may be in communication by way of a network connection and may collectively perform tasks described as being performed by the computing system 800.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disc storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-chip systems (SOCs), complex programmable logic devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to procedures whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. An attestation procedure, comprising, by a verifier:
receiving, as input, a measurement log representing measured states of components of a prover;
requesting, from a universal measurement database, security-related information pertaining to the components;
receiving, from the universal measurement database, a report comprising the security-related information; and
outputting a non-binary, severity-based attestation outcome based on the received security-related information.

2. The attestation procedure according to claim 1, further comprising selecting a severity level for the non-binary, severity-based attestation outcome based on the received security-related information, wherein the security level is selected from three or more severity levels comprising one severity level indicating that the attestation succeeded, another severity level indicating the attestation failed, and at least one further severity level providing information or a warning concerning a potential integrity violation.

3. The attestation procedure according to claim 2, wherein the at least one further level indicates one or more of the following: the existence of too many components in the prover; the existence of an historically-problematic component in the prover; the existence of a problematic combination of components in the prover; the existence of an outdated or obsolete component in the prover.

4. The attestation procedure according to any preceding claim, wherein the security-related information comprises known or reported vulnerabilities of the components.

5. The attestation procedure according to any preceding claim, wherein the universal measurement database aggregates the security-related information from one or more external sources.

6. The attestation procedure according to any preceding claim, wherein the universal measurement database analyses compositional insecurity by cross-referencing components that may pose a security threat when run together in the same environment.

7. The attestation procedure according to any preceding claim, wherein the universal measurement database is divided into multiple spaces.

8. The attestation procedure according to claim 7, wherein the multiple spaces comprise at least one local universal measurement database and at least one remote universal measurement database.

9. The attestation procedure according to claim 7 or 8, further comprising the verifier selecting a target universal measurement database based on the received measurement log.

10. The attestation procedure according to any preceding claim, further comprising the verifier communicating with the universal measurement database using one or more knowledge-retrieval interfaces exposed by the universal measurement database.

11. The attestation procedure according to any preceding claim, further comprising the verifier consulting one or more security policies for detecting vulnerabilities based on the report received from the universal measurement database.

12. An attestation procedure, comprising, by a prover, sending, to a verifier, a measurement log representing measured states of components of the prover.

13. A computing system configured to perform the attestation procedure according to any preceding claim.

14. A computer-readable medium comprising instructions which, when executed by a computing system, cause the computing system to perform the attestation procedure according to any of claims 1-12.
